# EUROPÄISCHE PATENTANMELDUNG

(11) **EP 4 645 253 A1**
(43) Veröffentlichungstag der Anmeldung: **05.11.2025**
(21) Anmeldenummer: 24173085.2
(22) Anmeldetag: 29.04.2024
(51) Int. Cl.: G06V 10/82, G06V 20/58

(54) **VERFAHREN ZUM ERMITTELN EINER UMGEBUNGSREPRÄSENTATION EINER UMGEBUNG EINES FAHRZEUGS**

(71) Anmelder: Robert Bosch GmbH, 70442 Stuttgart (DE)
(72) Erfinder: Jordan, Ruediger, 70176 Stuttgart (DE); Ulrich, Michael, 70469 Stuttgart (DE); Reinhardt, Johannes, 71272 Renningen (DE); Lin, Jiaying, 71106 Magstadt (DE)

(57) **Zusammenfassung**

Die Erfindung betrifft ein Verfahren (100) zum Ermitteln einer Umgebungsrepräsentation einer Umgebung eines Fahrzeugs (1), umfassend die nachfolgenden Schritte:
- Bereitstellen (101) von Eingabedaten, wobei die Eingabedaten Sensordaten (3) und Rückkopplungsdaten (4) umfassen, wobei die Sensordaten (3) aus einer Erfassung von wenigstens einem Sensor (2) des Fahrzeugs (1) resultieren, wobei die Sensordaten (3) eine Erfassung der Umgebung des Fahrzeugs (1) repräsentieren,
- Bereitstellen (102) eines Maschinenlernmodells (9), wobei das Maschinenlernmodell (9) ein Vorverarbeitungsmodul (5) und wenigstens ein aufgabenspezifisches Modul (6) aufweist,
- Bereitstellen (103) der Rückkopplungsdaten (4), wobei die Rückkopplungsdaten (4) zumindest eine vergangene Ausgabe (7) des wenigstens einen aufgabenspezifischen Moduls (6) und/oder zumindest eine vergangene Ausgabe des Vorverarbeitungsmoduls (5) umfassen, wobei die vergangene Ausgabe (7) wenigstens eine Iteration vor einer aktuellen Iteration durch das wenigstens eine aufgabenspezifische Modul (6) und/oder das Vorverarbeitungsmodul (5) bestimmt wurde,
- Extrahieren (104) von Merkmalen aus den Eingabedaten durch das Vorverarbeitungsmodul (5),
- Bestimmen (105) einer jeweiligen Ausgabe (7) durch das wenigstens eine aufgabenspezifische Modul (6) auf Basis der durch das Vorverarbeitungsmodul (5) extrahierten Merkmale und/oder der zumindest einen vergangenen Ausgabe (7) des wenigstens einen aufgabenspezifischen Moduls (6) und/oder der zumindest einen vergangenen Ausgabe des Vorverarbeitungsmoduls (5) für die aktuelle Iteration, um die Umgebungsrepräsentation der Umgebung des Fahrzeugs (1) zu ermitteln.

Ferner betrifft die Erfindung ein Computerprogramm, eine Vorrichtung sowie ein Speichermedium zu diesem Zweck.

## Beschreibung

Die Erfindung betrifft ein Verfahren zum Ermitteln einer Umgebungsrepräsentation einer Umgebung eines Fahrzeugs. Ferner betrifft die Erfindung ein Computerprogramm, eine Vorrichtung sowie ein Speichermedium zu diesem Zweck.

### Stand der Technik

Für fortschrittliche Fahrerassistenzsysteme und autonomes Fahren gibt es mehrere Aufgaben, die verschiedene Aspekte der Umgebung aus Sensoreingaben, bzw. Sensormessungen ableiten. Bei einer Objekterkennung werden andere Verkehrsteilnehmer erkannt und klassifiziert. Bei einer semantischen Segmentierung wird ermittelt, zu welchen semantischen Kategorien ein Pixel oder ein Punkt einer Punktwolke gehört. In einer "befahrbarer Raum"-Aufgabe wird ermittelt, welche Teile des Raumes befahrbar sind. Bei der Erkennung von Straßenrändern, Straßen oder Spuren wird der Straßenverlauf in verschiedenen Detaillierungsgraden bestimmt.

Im üblichen Paradigma des Tracking-by-Detection werden Algorithmen für diese Aufgaben in einen Detektoralgorithmus aufgeteilt, der die Sensoreingaben bei einer einzigen Messung verarbeitet, gefolgt von einem Tracking-Algorithmus, der die Ausgabe des Detektors über die Zeit berücksichtigt. Alternative Ansätze verwenden tiefe neuronale Netze für die Objekterkennung mit Speicher, z. B. bestimmte Schichten oder eine Rückkopplung von Transformator-Token, um die Verfolgung in einem Merkmalsraum durchzuführen.

### Offenbarung der Erfindung

Gegenstand der Erfindung ist ein Verfahren mit den Merkmalen des Anspruchs 1, ein Computerprogramm mit den Merkmalen des Anspruchs 9, eine Vorrichtung mit den Merkmalen des Anspruchs 10 sowie ein computerlesbares Speichermedium mit den Merkmalen des Anspruchs 11. Weitere Merkmale und Details der Erfindung ergeben sich aus den jeweiligen Unteransprüchen, der Beschreibung und den Zeichnungen. Dabei gelten Merkmale und Details, die im Zusammenhang mit dem erfindungsgemäßen Verfahren beschrieben sind, selbstverständlich auch im Zusammenhang mit dem erfindungsgemäßen Computerprogramm, der erfindungsgemäßen Vorrichtung sowie dem erfindungsgemäßen computerlesbaren Speichermedium, und jeweils umgekehrt, so dass bezüglich der Offenbarung der Erfindung stets auch eine wechselseitige Bezugnahme möglich ist.

Gegenstand der Erfindung ist insbesondere ein Verfahren zum Ermitteln einer Umgebungsrepräsentation einer Umgebung eines Fahrzeugs, umfassend die nachfolgenden Schritte, wobei die Schritte wiederholt und/oder nacheinander durchgeführt werden können. Das Fahrzeug kann beispielsweise ein Personenkraftwagen oder Nutzfahrzeug sein. Die Umgebung des Fahrzeugs ist dann insbesondere eine Verkehrsumgebung. Es ist aber auch denkbar, dass das Fahrzeug ein Roboter ist.

In einem ersten Schritt werden vorzugsweise Eingabedaten bereitgestellt, wobei die Eingabedaten Sensordaten und Rückkopplungsdaten umfassen. Die Sensordaten resultieren vorzugsweise aus einer Erfassung von wenigstens einem Sensor des Fahrzeugs, wobei die Sensordaten eine Erfassung der Umgebung des Fahrzeugs repräsentieren. Wenn wenigstens zwei Sensoren vorgesehen sind, können die wenigstens zwei Sensoren derselbe oder ein jeweils unterschiedlicher Typ von Sensor sein. Beispielsweise können die Sensoren jeweils als Kamera-, Radar-, Lidar- oder Ultraschallsensor ausgebildet sein, wobei diese Liste nicht abschließend ist. Die Sensordaten können entsprechend Bilddaten, Radardaten, Lidar-Daten und/oder Ultraschalldaten umfassen. Die Sensordaten können insofern die Umgebung des Fahrzeugs repräsentieren, als dass diese die Umgebung ausgehend von dem Fahrzeug erfassen oder erfasst haben.

In einem weiteren Schritt wird vorzugsweise ein Maschinenlernmodell bereitgestellt, wobei das Maschinenlernmodell ein Vorverarbeitungsmodul und wenigstens ein aufgabenspezifisches Modul aufweist. Das Vorverarbeitungsmodul kann im Rahmen der vorliegenden Erfindung auch als "Backbone" bezeichnet und verstanden werden. Das wenigstens eine aufgabenspezifische Modul kann im Rahmen der vorliegenden Erfindung auch als "Detektionskopf" bezeichnet und verstanden werden. Entsprechend kann das wenigstens eine aufgabenspezifische Modul vorteilhaft für eine Detektions- und/oder eine Klassifikationsaufgabe ausgebildet sein. Beispiele für Aufgaben sind eine Objektdetektion wie bspw. von weiteren Verkehrsteilnehmern oder auch eine Detektion eines befahrbaren Raumes. Eine weitere mögliche Aufgabe wäre, dass eine Sichtbarkeit geschätzt wird, d.h. wo die Sensoren etwas detektieren können. Ferner kann eine Objektdetektion hinsichtlich verschiedener Infrastrukturen wie Ampeln, Brücken, o.ä. durchgeführt werden. Zudem ist denkbar, dass eine Tiefenschätzung durchgeführt wird, d.h. ein Ermitteln von fehlenden 3D Koordinaten aus einem oder mehreren 2D Bildern. Ferner kann eine Eingeschränktheit von Sensoren z.B. durch Verschmutzung oder Eis festgestellt werden. Auch kann allgemein das Wetter oder auch eine Änderung der Ausrichtung von Sensoren, z.B. durch einen Unfall detektiert werden.

In einem weiteren Schritt werden vorzugsweise die Rückkopplungsdaten bereitgestellt, wobei die Rückkopplungsdaten zumindest eine vergangene Ausgabe des wenigstens einen aufgabenspezifischen Moduls und/oder zumindest eine vergangene Ausgabe des Vorverarbeitungsmoduls umfassen. Die vergangene Ausgabe wurde insbesondere wenigstens eine Iteration vor einer aktuellen Iteration durch das wenigstens eine aufgabenspezifische Modul und/oder das Vorverarbeitungsmodul bestimmt. Die Iteration kann auch als Zeitschritt oder Zyklus bezeichnet und verstanden werden und repräsentiert insbesondere einen vergangenen Zeitraum, in welchem die Ausgabe bestimmt wurde.

In einem weiteren Schritt werden vorzugsweise Merkmale aus den Eingabedaten durch das Vorverarbeitungsmodul extrahiert. Das Vorverarbeitungsmodul des Maschinenlernmodells kann die Merkmale aus den Eingabedaten extrahieren, indem es Muster und Zusammenhänge in den Eingabedaten identifiziert. Dazu kann das Modell beispielsweise neuronale Netze, Entscheidungsbäume oder Support Vector Machines nutzen. Das Vorverarbeitungsmodul kann dafür in einem entsprechenden Training lernen, welche Merkmale in den Eingabedaten für das nachstehend erwähnte aufgabenspezifische Modul wichtig sind, indem es mit Trainingsdaten trainiert wird und die jeweiligen Ergebnisse, bzw. Ausgaben, des aufgabenspezifischen Moduls mit Referenzdaten verglichen werden. Die extrahierten Merkmale können je nach Anwendungsbereich unterschiedlich sein. Beispielsweise könnten die extrahierten Merkmale Objekte wie Fahrzeugen oder Passanten in der Umgebung des Fahrzeugs repräsentieren oder auch von abstrakterer Natur und nicht direkt interpretierbar sein. In letzterem Fall kann die Interpretation anschließend entsprechend von dem wenigstens einen aufgabenspezifischen Modul durchgeführt werden.

In einem weiteren Schritt wird vorzugsweise eine jeweilige Ausgabe durch das wenigstens eine aufgabenspezifische Modul auf Basis der durch das Vorverarbeitungsmodul extrahierten Merkmale und/oder der zumindest einen vergangenen Ausgabe des wenigstens einen aufgabenspezifischen Moduls und/oder der zumindest einen vergangenen Ausgabe des Vorverarbeitungsmoduls für die aktuelle Iteration bestimmt, um die Umgebungsrepräsentation der Umgebung des Fahrzeugs zu ermitteln. Die jeweilige Ausgabe kann demnach einer jeweiligen spezifischen Umgebungsrepräsentation entsprechen. Bei der Ausgabe kann es sich z. B. um Begrenzungsrahmen für eine Objekterkennung, semantische Kennzeichnungen für Pixel oder Punkte für eine semantische Segmentierung, eine Rasterkarte mit Kennzeichnungen für eine befahrbare Fläche oder eine Belegung einer befahrbaren Fläche, eine Rasterkarte oder eine Reihe von parametrisierten Linien für die Lage der Straße oder der Fahrspur für die Erkennung von Straßenbegrenzungen, Straßen oder Spuren handeln.

In einem weiteren möglichen Schritt kann eine aufgabenspezifische Analyse der Umgebung des Fahrzeugs auf Basis der bestimmten Ausgabe des wenigstens einen aufgabenspezifischen Moduls und/oder der zumindest einen vergangenen Ausgabe des Vorverarbeitungsmoduls bereitgestellt werden. Die aufgabenspezifische Analyse entspricht insbesondere einer Interpretation der Ausgabe des wenigstens einen aufgabenspezifischen Moduls und kann beispielsweise umfassen, ob ein bestimmtes Objekt oder Hindernis in der Umgebung des Fahrzeugs vorliegt, oder ob ein Raum vor dem Fahrzeug befahrbar ist.

In einer weiteren Möglichkeit kann vorgesehen sein, dass die Rückkopplungsdaten ferner vergangene Sensordaten aus der wenigstens einen Iteration vor der aktuellen Iteration und/oder vergangene verarbeitete Eingabedaten aus der wenigstens einen Iteration vor der aktuellen Iteration umfassen, wobei das Extrahieren ferner auf Basis der vergangenen Sensordaten und/oder der vergangenen verarbeiteten Eingabedaten durchgeführt wird. Es ist auch denkbar, dass eine Kombination verschiedener Iterationen verwendet wird, beispielsweise Sensordaten der letzten fünf Iterationen, aber nur verarbeitete Eingabedaten der letzten drei Iterationen. Durch die genannten weiteren vergangenen Daten kann vorteilhaft eine noch differenziertere Extraktion von Merkmalen erfolgen und daraus folgend eine präzisere aufgabenspezifische Analyse der Umgebung.

Außerdem ist es von Vorteil, wenn das Bereitstellen der Rückkopplungsdaten den folgenden Schritt umfasst:
- Transformieren der vergangenen Ausgabe unter Verwendung eines physikalischen Modells, wobei das physikalische Modell zumindest eine Bewegung des Fahrzeugs und/oder wenigstens eines durch das wenigstens eine aufgabenspezifische Modul detektierten Objekts beschreibt.

Durch das Transformieren kann vorteilhaft die Bewegung des Fahrzeugs und/oder des wenigstens des durch das wenigstens eine aufgabenspezifische Modul detektierten Objekts berücksichtigt werden und dadurch kann das Bestimmen der Ausgabe und die aufgabenspezifische Analyse präziser durchgeführt werden. Das physikalische Modell kann auch ein gelerntes Modell sein, sodass die vergangene Ausgabe alternativ auch von dem gelernten Modell transformiert werden kann. Ferner können neben der Bewegung auch andere zeitabhängige Prozesse durch das physikalische Modell, bzw. das gelernte Modell modelliert werden.

Beispielsweise kann es zudem vorgesehen sein, dass wenigstens zwei Sensoren vorgesehen sind und die wenigstens zwei Sensoren wenigstens zwei verschiedene Typen von Sensoren sind. So kann vorteilhaft eine verschiedenartige Erfassung der Umgebung als Sensordaten bereitgestellt werden und dadurch eine differenziertere aufgabenspezifische Analyse ermöglicht werden. Es ist beispielsweise denkbar, dass ein Sensortyp ein Radarsensor und ein weiterer Sensortyp ein Kamerasensor ist. So kann zum Beispiel vorteilhaft bei einer Analyse eines Kamerabildes zusätzlich ein Radarbild derselben Umgebung berücksichtigt werden.

Außerdem ist es von Vorteil, wenn das Verfahren ferner wenigstens einen der folgenden Schritte umfasst:
- Initiieren einer visuellen oder akustischen Benachrichtigung in dem Fahrzeug auf Basis der bestimmten jeweiligen Ausgabe,
- Initiieren einer Steuerung des Fahrzeugs auf Basis der bestimmten jeweiligen Ausgabe.

Die Benachrichtigung kann beispielsweise über einen Lautsprecher oder ein Display des Fahrzeugs ausgegeben werden. Die Steuerung des Fahrzeugs kann beispielsweise ein Bremsmanöver sein, zum Beispiel wenn die bestimmte jeweilige Ausgabe indiziert, dass ein Hindernis in einem Fahrweg des Fahrzeugs vorliegt.

Weiter ist im Rahmen der Erfindung denkbar, dass das Vorverarbeitungsmodul als ein faltungsneuronales Netz, ein Transformator- oder Punktverarbeitungsnetz oder als eine Kombination dieser Netztypen ausgebildet ist.

Ein faltungsneuronales Netz (englisch: "Convolutional Neural Network", CNN) ist insbesondere eine Klasse von Deep Learning-Algorithmen, die hauptsächlich in der Bild- und Videoerkennung, Bildklassifizierung, Objekterkennung und ähnlichen Aufgaben eingesetzt werden können. CNNs gehören zu den neuronalen Netzwerken, die durch ihre spezielle Architektur effizient räumliche Hierarchien von Merkmalen in Daten erfassen können. Ein CNN besteht beispielsweise aus einer Sequenz von Schichten, die Daten durch verschiedene Arten von Operationen transformieren. Faltungsschichten führen vorzugsweise eine Faltungsoperation aus, bei der Filter (oder Kerne) über die Eingabe bewegt werden, um Merkmale wie Kanten oder Texturen zu extrahieren. Die Faltung reduziert insbesondere die Dimensionalität der Daten, behält aber wichtige räumliche Informationen bei. Nach jeder Faltung wird vorzugsweise eine nichtlineare Aktivierungsfunktion, wie die ReLU-Funktion (Rectified Linear Unit), angewendet, um Nichtlinearitäten in das Netzwerk einzuführen und es zu ermöglichen, komplexe Muster zu lernen. Pooling-Schichten reduzieren insbesondere weiter die Dimensionalität der Daten durch Operationen wie Max Pooling oder Average Pooling, bei denen das Maximum oder der Durchschnitt von Werten in einem bestimmten Bereich der Daten genommen wird. Dies kann helfen, die Rechenlast zu verringern und die Robustheit gegenüber kleinen Variationen in den Daten zu erhöhen. Am Ende des Netzwerks stehen vorzugsweise eine oder mehrere vollständig verbundene Schichten, die die erlernten Merkmale zur Ausführung spezifischer Aufgaben wie Klassifizierung verwenden. Hier wird bevorzugt eine Klassifizierung basierend auf den erkannten und verarbeiteten Merkmalen vorgenommen. Die letzte Schicht eines CNNs gibt insbesondere die Vorhersage des Netzwerks aus, beispielsweise die Wahrscheinlichkeiten für verschiedene Klassen in einer Klassifizierungsaufgabe.

Ein Transformatorverarbeitungsnetz, auch als "Transformator" oder "Transformer" bezeichnet, ist insbesondere ein Architekturmodell, das ursprünglich für Aufgaben der Verarbeitung natürlicher Sprache (Natural Language Processing, NLP) entwickelt wurde. Es wurde erstmals im Paper "Attention is All You Need" von Vaswani et al. im Jahr 2017 vorgestellt. Die zentrale Innovation der Transformator-Architektur ist insbesondere der Mechanismus der Selbst-Aufmerksamkeit (self-attention), der es dem Modell ermöglichen kann, die Bedeutung eines Wortes im Kontext aller anderen Wörter im Satz zu gewichten und zu interpretieren.

Ein Punktverarbeitungsnetz, im Englischen auch als "Point Processing Network" oder spezifischer im Kontext von 3D-Daten als "PointNet" bezeichnet, ist insbesondere ein Typ von neuronalen Netzwerken, der für die direkte Verarbeitung von Punktwolken konzipiert ist. Punktwolken sind beispielsweise eine Sammlung von Punkten im Raum, die Objekte oder Szenen darstellen und typischerweise von 3D-Scannern oder anderen Tiefensensoren erfasst werden. Diese Datenstruktur kann für Anwendungen in den Bereichen Robotik, autonome Fahrzeuge, Augmented Reality und 3D-Modellierung verwendet werden, wo eine effiziente und effektive Verarbeitung räumlicher Informationen erforderlich ist.

Es ist möglich, dass das erfindungsgemäße Verfahren bei einem Fahrzeug zum Einsatz kommt. Das Fahrzeug kann bspw. als ein Kraftfahrzeug und/oder Personenkraftfahrzeug und/oder autonomes Fahrzeug ausgebildet sein. Das Fahrzeug kann eine Fahrzeugeinrichtung, bspw. zur Bereitstellung einer autonomen Fahrfunktion und/oder ein Fahrerassistenzsystem aufweisen. Die Fahrzeugeinrichtung kann dazu ausgeführt sein, das Fahrzeug zumindest teilweise automatisch zu steuern und/oder zu beschleunigen und/oder abzubremsen und/oder zu lenken.

Das Maschinenlernmodell wird insbesondere für eine Klassifikation und/oder Objektdetektion trainiert. Entsprechend kann aus dem Training ein trainiertes Maschinenlernmodell resultieren, welches für die Klassifikation und/oder Objektdetektion eingesetzt werden kann. Der Einsatz und damit die Inferenz kann zum Beispiel in einem Fahrzeug vorgesehen sein. Die Datenpunkte der Eingabedaten können zum Beispiel Pixel von Bilddaten sein oder auf diesen basieren, um die Klassifikation und/oder Objektdetektion der Datenpunkte somit auf Basis der Pixel durchzuführen. Die Eingabedaten können Sensor- und/oder Bilddaten umfassen, welche zumindest teilweise aus einer Erfassung mit einem Sensor, vorzugsweise Kamerasensor, resultieren und/oder welche zumindest teilweise synthetisiert worden sind, also insbesondere die realen Daten eines Sensors nachbilden. Konkret kann es vorgesehen sein, dass durch die Werte von Bildpunkten, vorzugsweise Pixeln, der Bilddaten eine Umgebung eines Sensors und/oder eines Fahrzeuges und/oder eine Verkehrsszene repräsentiert wird. Es kann eine Klassifizierung, vorzugsweise Bildklassifikation und/oder Objektdetektion, auf Basis dieser Werte vorgesehen sein. Dies ermöglicht es bspw., Objekte der Verkehrsszene detektiert werden. Die Klassifizierung kann dabei auch in der Form einer semantischen Segmentierung (d. h. einer pixel- oder bereichsweisen Klassifizierung) und/oder einer Objektdetektion vorgesehen sein. Die Bilddaten können z. B. Bilder eines Radarsensors und/oder eines Ultraschallsensors und/oder eines LiDAR-Sensors und/oder einer Thermobildkamera sein. Entsprechend können die Bilder auch als Radarbilder und/oder Ultraschallbilder und/oder thermische Bilder und/oder Lidarbilder ausgeführt sein.

Ebenfalls Gegenstand der Erfindung ist ein Computerprogramm, insbesondere Computerprogrammprodukt, umfassend Befehle, die bei der Ausführung des Computerprogrammes durch einen Computer diesen veranlassen, das erfindungsgemäße Verfahren auszuführen. Damit bringt das erfindungsgemäße Computerprogramm die gleichen Vorteile mit sich, wie sie ausführlich mit Bezug auf ein erfindungsgemäßes Verfahren beschrieben worden sind.

Ebenfalls Gegenstand der Erfindung ist eine Vorrichtung zur Datenverarbeitung, die eingerichtet ist, das erfindungsgemäße Verfahren auszuführen. Als die Vorrichtung kann bspw. ein Computer vorgesehen sein, welcher das erfindungsgemäße Computerprogramm ausführt. Der Computer kann wenigstens einen Prozessor zur Ausführung des Computerprogramms aufweisen. Auch kann ein nichtflüchtiger Datenspeicher vorgesehen sein, in welchem das Computerprogramm hinterlegt und von welchem das Computerprogramm durch den Prozessor zur Ausführung ausgelesen werden kann.

Ebenfalls Gegenstand der Erfindung kann ein computerlesbares Speichermedium sein, welches das erfindungsgemäße Computerprogramm aufweist und/oder Befehle umfasst, die bei der Ausführung durch einen Computer diesen veranlassen, das erfindungsgemäße Verfahren auszuführen. Das Speichermedium ist bspw. als ein Datenspeicher wie eine Festplatte und/oder ein nicht-flüchtiger Speicher und/oder eine Speicherkarte ausgebildet. Das Speichermedium kann z. B. in den Computer integriert sein.

Darüber hinaus kann das erfindungsgemäße Verfahren auch als ein computerimplementiertes Verfahren ausgeführt sein.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung im Einzelnen beschrieben sind. Dabei können die in den Ansprüchen und in der Beschreibung erwähnten Merkmale jeweils einzeln für sich oder in beliebiger Kombination erfindungswesentlich sein. Es zeigen:
- Fig. 1: eine schematische Visualisierung eines Verfahrens, eines Fahrzeugs mit zwei Sensoren, einer Vorrichtung, eines Speichermediums sowie eines Computerprogramms gemäß Ausführungsbeispielen der Erfindung,
- Fig. 2: eine schematische Darstellung eines speziellen Ausführungsbeispiels des Verfahrens gemäß Ausführungsbeispielen der Erfindung,
- Fig. 3: eine schematische Darstellung eines allgemeinen Ausführungsbeispiels des Verfahrens gemäß Ausführungsbeispielen der Erfindung.

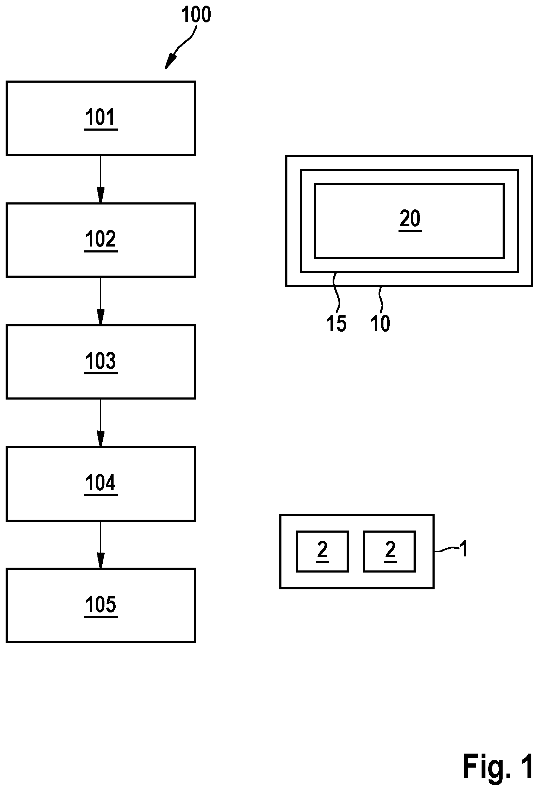

In Fig. 1 sind ein Verfahren 100, ein Fahrzeug 1 mit zwei Sensoren 2, eine Vorrichtung 10, ein Speichermedium 15 sowie ein Computerprogramm 20 gemäß Ausführungsbeispielen der Erfindung schematisch dargestellt.

Alternativ zu dem Ausführungsbeispiel in Fig. 1 ist auch eine Verwendung eines einzelnen Sensors 2 für die Durchführung des Verfahrens 100 gemäß der Erfindung denkbar.

Fig. 1 zeigt insbesondere ein Ausführungsbeispiel für ein Verfahren 100 zum Ermitteln einer Umgebungsrepräsentation einer Umgebung eines Fahrzeugs 1. In einem ersten Schritt 101 werden Eingabedaten bereitgestellt, wobei die Eingabedaten Sensordaten 3 und Rückkopplungsdaten 4 umfassen. Die Sensordaten 3 resultieren aus einer Erfassung von wenigstens einem Sensor 2 des Fahrzeugs 1, wobei die Sensordaten 3 eine Erfassung der Umgebung des Fahrzeugs 1 repräsentieren. In einem zweiten Schritt 102 wird ein Maschinenlernmodell 9 bereitgestellt, wobei das Maschinenlernmodell 9 ein Vorverarbeitungsmodul 5 und wenigstens ein aufgabenspezifisches Modul 6 aufweist. In einem dritten Schritt 103 werden die Rückkopplungsdaten 4 bereitgestellt, wobei die Rückkopplungsdaten 4 zumindest eine vergangene Ausgabe 7 des wenigstens einen aufgabenspezifischen Moduls 6 und/oder zumindest eine vergangene Ausgabe des Vorverarbeitungsmoduls 5 umfassen, wobei die vergangene Ausgabe 7 wenigstens eine Iteration vor einer aktuellen Iteration durch das wenigstens eine aufgabenspezifische Modul 6 und/oder das Vorverarbeitungsmodul 5 bestimmt wurde. In einem vierten Schritt 104 werden Merkmale aus den Eingabedaten durch das Vorverarbeitungsmodul 5 extrahiert. In einem fünften Schritt 105 wird eine jeweilige Ausgabe 7 durch das wenigstens eine aufgabenspezifische Modul 6 auf Basis der durch das Vorverarbeitungsmodul 5 extrahierten Merkmale und/oder der zumindest einen vergangenen Ausgabe 7 des wenigstens einen aufgabenspezifischen Moduls 6 und/oder der zumindest einen vergangenen Ausgabe des Vorverarbeitungsmoduls 5 für die aktuelle Iteration bestimmt, um die Umgebungsrepräsentation der Umgebung des Fahrzeugs 1 zu ermitteln.

In einem weiteren möglichen Schritt kann eine aufgabenspezifische Analyse der Umgebung auf Basis der bestimmten Ausgabe 7 des wenigstens einen aufgabenspezifischen Moduls 6 bereitgestellt werden.

Ein Aspekt der vorliegenden Erfindung ist insbesondere eine Verwendung eines Maschinenlernmodells 9, z. B. eines neuronalen Netzes, das zeitliche Rückkopplungen nutzt und mehrere Aufgaben gleichzeitig ausführt.

Das erfindungsgemäße Verfahren kann ermöglichen, den zeitlichen Kontext zu berücksichtigen und die hohe zeitliche Korrelation der Ein- und Ausgänge des Maschinenlernmodells 9 auszunutzen.

Darüber hinaus hat die Verwendung eines einzigen Maschinenlernmodells 9 zur Lösung mehrerer Aufgaben (eines so genannten Multitask-Netzes) zusätzliche Vorteile im Vergleich zu Maschinenlernmodellen für einzelne Aufgaben: Es kann genauere und robustere Ergebnisse für jede Aufgabe bereitstellen, da das Maschinenlernmodell 9 allgemeinere Merkmale lernen kann. Es werden beispielsweise weniger Trainingsdaten benötigt, da das Backbone, bzw. Vorverarbeitungsmodul 5, von allen aufgabenspezifischen Modulen 6 gemeinsam genutzt werden kann. Es kann ein geringerer Rechenaufwand und es können geringere Hardwareanforderungen notwendig sein, da die Auswertung des Vorverarbeitungsmoduls 5 von allen aufgabenspezifischen Modulen 6 gemeinsam genutzt werden kann.

Die Vorteile einer expliziten Rückkopplung eines Ausgangs des Maschinenlernmodells 9 auf den Eingang des nächsten Zeitschritts sind die folgenden: Außer einem zusätzlichen Netzeingang werden insbesondere keine weiteren Netzschichten benötigt. Daher steigen insbesondere die Anforderungen an die Menge der Trainingsdaten im Vergleich zur Einzelbilddetektion nicht wesentlich. Die Einbeziehung von Daten aus mehreren Zeitschritten kann eine Kompensation der Bewegung des Ego-Fahrzeugs sowie der Bewegung der Objekte in der Umgebung des Fahrzeugs 1 erfordern. Dies kann mit dem Ansatz gemäß Ausführungsbeispielen der Erfindung problemlos möglich sein, z. B. unter Verwendung physikalischer Modelle 8, wie dem Vorhersageschritt eines Kalman-Filters. Im Gegensatz dazu ist die Bewegungskompensation mit impliziten Repräsentationen im Merkmalsraum eine Herausforderung.

Das Verfahren gemäß Ausführungsbeispielen der Erfindung ist beispielsweise in Situationen anwendbar, in denen Sensoren 2 zur Messung einer dynamischen Umgebung eingesetzt werden. Zum Beispiel bei der Fahrerassistenz und beim automatisierten Fahren, wo Sensordaten 3 von Kamera, Radar und Lidar verwendet werden, um andere Verkehrsteilnehmer, den Straßenverlauf und semantische Karten der Umgebung zu schätzen. Weitere Anwendungen könnten die Innen- und Außenrobotik, Sicherheitssysteme und die Lagerlogistik sein.

Ein solches Maschinenlernmodell 9 im Sinne eines Rückkopplungsnetzes könnte in der Perzeption eingesetzt werden. Die Perzeption steht beispielsweise am Anfang eines Verarbeitungsstacks und kann vorverarbeitete Sensordaten 3 von früheren Ebenen empfangen, und die Ausgabe der Perzeption kann von späteren Ebenen verwendet werden. In einem Fahrassistenz-System könnte das Maschinenlernmodell 9 zum Beispiel ein entzerrtes Bild von einem Kamerasensor und Radarreflexionen von mehreren Radarsensoren empfangen, und die Ausgabe des Maschinenlernmodells 9 kann für die weitere Verarbeitung des Umgebungsmodells, die Planung und das Handeln verwendet werden.

Dieser Rückkopplungsmechanismus beruht insbesondere darauf, dass aufeinanderfolgende Sensormessungen zeitlich korreliert sind, so dass es möglich ist, aus früheren Zeitschritten Informationen über die Welt im aktuellen Zeitschritt zu gewinnen.

So ist beispielsweise eine schwache Radarortung in einem bestimmten Bereich des Raums eher ein Hinweis auf ein Fahrzeug oder weiteren Verkehrsteilnehmer zu diesem Zeitpunkt, wenn in der vorherigen Iteration, bzw. im vorangegangenen Zeitschritt, ein Fahrzeug oder weiterer Verkehrsteilnehmer in diesem Bereich entdeckt wurde.

Der Multitasking-Mechanismus nutzt beispielsweise die Tatsache aus, dass die Aufgaben nicht unabhängig sind. So ist es beispielsweise unwahrscheinlicher, dass eine Radarposition auf ein Fahrzeug oder weiteren Verkehrsteilnehmer hinweist, wenn die Pixel des Kamerabildes in diesem Bereich des Raumes durch die semantische Segmentierung als Vegetation eingestuft werden.

Durch die Kombination beider Verfahren können sowohl zeitliche als auch aufgabenübergreifende Korrelationen ausgenutzt werden.

So ist es zum Beispiel weniger wahrscheinlich, dass ein Kamerapixel zur Vegetation gehört, wenn in der vorherigen Iteration, bzw. im vorherigen Zeitschritt ein sich bewegendes Objekt in der Nähe erkannt wurde.

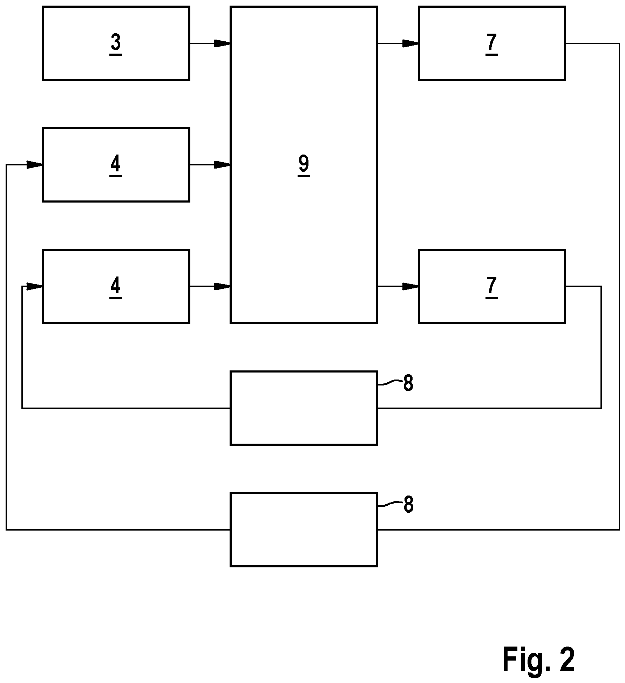

Als konkretes Beispiel gemäß Fig. 2 kann das Maschinenmodell 9, einen befahrbaren Raum schätzen und Objekte anhand von Radarreflexionen erkennen. Für jeden Messzyklus des Radarsensors werden insbesondere die gemessenen Reflexionen als Sensordaten 3 zusammen mit den unter Verwendung eines physikalischen Modells 8 bewegungskompensierten Ausgaben 7 als Rückkopplungsdaten 4 des letzten Zyklus in das Maschinenmodell 9 eingegeben.

Die Kompensation funktioniert insbesondere etwas anders für den befahrbaren Raum, wo nur die Ego-Bewegung des Fahrzeugs 1 unter Verwendung des physikalischen Modells 8 kompensiert wird und für detektierte Objekte, wo unter Verwendung des physikalischen Modells 8 zusätzlich die Bewegung des detektierten Objekts berücksichtigt werden kann.

Durch die Rückmeldung kann das Netz lernen Objekte zu verfolgen, den zeitlichen Kontext zu nutzen, eine Nutzung von aufgabenübergreifenden Informationen bereitzustellen und Kombinationen davon.

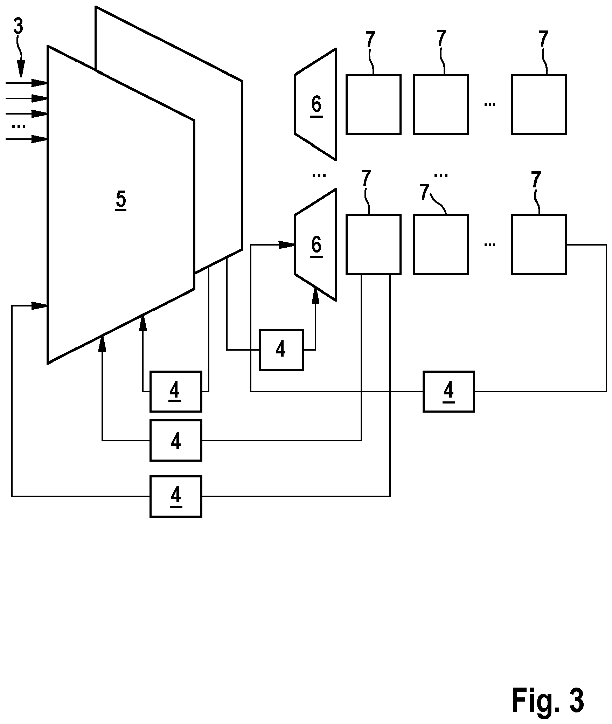

Ein Schema des Datenflusses gemäß einem Ausführungsbeispiel durch ein allgemeines Maschinenlernmodell 9 ist in Fig. 3 dargestellt. Das Maschinenlernmodell 9 umfasst ein Vorverarbeitungsmodul 5 und mehrere aufgabenspezifische Module 6. Die Eingabe für das Maschinenlernmodell 9 sind Sensordaten 3 für den Zeitschritt t und Rückkopplungsdaten 4. Die Sensordaten 3 können von einem oder mehreren Sensoren 2 eines gleichen oder eines verschiedenen Sensortyps stammen. Dabei kann es sich beispielsweise um Ortsdaten oder Spektren von einem oder mehreren Radarsensoren, Bilder von einer oder mehreren Kamerasensoren, Punktwolken von einem oder mehreren Lidarsensoren oder auch um beliebige gelernte Merkmalsräume aus einem vorgeschalteten Maschinenlernmodell handeln.

Rückkopplungsdaten 4 sind beispielsweise Daten aus früheren Zeitschritten, z. B. aus einer vorherigen Iteration, bzw. einem vorherigen Zeitschritt oder aus weiter zurückliegenden Iterationen, bzw. Zeitschritten. Die Rückkopplungsdaten 4 können die Ausgabe 7 des aufgabenspezifischen Moduls 6, bzw. Detektionskopf, des Vorverarbeitungsmoduls 5, bzw. Backbone, oder einer beliebigen Zwischenschicht aus einem früheren Zeitschritt zurückführen. Diese Rückkopplung kann am Anfang des Vorverarbeitungsmoduls 5 zusammen mit den Sensordaten 3, auf einer beliebigen Schicht innerhalb des Vorverarbeitungsmoduls 5 oder auf einer beliebigen Schicht eines aufgabenspezifischen Moduls 6 in das Maschinenlernmodell 9 eintreten. Da Rückkopplungsverbindungen insbesondere Schichtdaten mit unterschiedlichen Zeitstempeln verknüpfen, kann die Zielebene vor oder nach der Quellenebene liegen, was den Datenfluss betrifft. Fig. 3 zeigt einige Möglichkeiten für Rückkopplungsverbindungen, d.h. Verbindungen für die Rücckopplungsdaten 4. Rückkopplungsverbindungen können Berechnungen in Form von expliziten Transformationen (wie die Bewegungsvorhersage dynamischer detektierter Objekte oder die Kompensation von Ego-Bewegungen des Fahrzeugs 1 unter Verwendung physikalischer Modelle 8) oder zusätzliche gelernte Schichten, wie Long short-term memory (LSTM)-Schichten, zusätzliche Faltungsschichten, Pooling oder andere Up- oder Downsampling-Schichten beinhalten.

Die Sensordaten 3 werden dann vorzugsweise durch das Vorverarbeitungsmodul 5 des Maschinenlernmodells 9 transformiert, das z.B. als Faltungsneuronales Netz (CNN), Transformator oder Punktverarbeitungsnetz oder eine Kombination dieser Netztypen realisiert werden kann.

Die Ausgabe des Vorverarbeitungsmoduls 5 ist insbesondere ein Satz abstrakter, allgemeiner Merkmale und wird vorzugsweise in ein oder mehrere aufgabenspezifische Module 6 eingespeist, die aus diesen allgemeinen Merkmalen eine aufgabenspezifische Ausgabe 7 für den Zeitschritt, bzw. die Iteration, t bestimmen. Bei der Ausgabe 7 kann es sich z. B. um Begrenzungsrahmen für die Objekterkennung, semantische Kennzeichnungen für jedes Pixel oder jeden Punkt für die semantische Segmentierung, eine Rasterkarte mit Kennzeichnungen für die befahrbare Fläche oder die Belegung für die befahrbare Fläche, eine Rasterkarte oder eine Reihe von parametrisierten Linien für die Lage der Straße oder der Fahrspur für die Erkennung von Straßenbegrenzungen, Straßen oder Spuren handeln.

Ein solches Maschinenlernmodell 9 kann überwacht, halbüberwacht oder unüberwacht trainiert werden.

Die voranstehende Erläuterung der Ausführungsformen beschreibt die vorliegende Erfindung ausschließlich im Rahmen von Beispielen. Selbstverständlich können einzelne Merkmale der Ausführungsformen, sofern technisch sinnvoll, frei miteinander kombiniert werden, ohne den Rahmen der vorliegenden Erfindung zu verlassen.

## Patentansprüche

1. Verfahren (100) zum Ermitteln einer Umgebungsrepräsentation einer Umgebung eines Fahrzeugs (1), umfassend die nachfolgenden Schritte:
- Bereitstellen (101) von Eingabedaten, wobei die Eingabedaten Sensordaten (3) und Rückkopplungsdaten (4) umfassen, wobei die Sensordaten (3) aus einer Erfassung von wenigstens einem Sensor (2) des Fahrzeugs (1) resultieren, wobei die Sensordaten (3) eine Erfassung der Umgebung des Fahrzeugs (1) repräsentieren,
- Bereitstellen (102) eines Maschinenlernmodells (9), wobei das Maschinenlernmodell (9) ein Vorverarbeitungsmodul (5) und wenigstens ein aufgabenspezifisches Modul (6) aufweist,
- Bereitstellen (103) der Rückkopplungsdaten (4), wobei die Rücckopplungsdaten (4) zumindest eine vergangene Ausgabe (7) des wenigstens einen aufgabenspezifischen Moduls (6) und/oder zumindest eine vergangene Ausgabe des Vorverarbeitungsmoduls (5) umfassen, wobei die vergangene Ausgabe (7) wenigstens eine Iteration vor einer aktuellen Iteration durch das wenigstens eine aufgabenspezifische Modul (6) und/oder das Vorverarbeitungsmodul (5) bestimmt wurde,
- Extrahieren (104) von Merkmalen aus den Eingabedaten durch das Vorverarbeitungsmodul (5),
- Bestimmen (105) einer jeweiligen Ausgabe (7) durch das wenigstens eine aufgabenspezifische Modul (6) auf Basis der durch das Vorverarbeitungsmodul (5) extrahierten Merkmale und/oder der zumindest einen vergangenen Ausgabe (7) des wenigstens einen aufgabenspezifischen Moduls (6) und/oder der zumindest einen vergangenen Ausgabe des Vorverarbeitungsmoduls (5) für die aktuelle Iteration, um die Umgebungsrepräsentation der Umgebung des Fahrzeugs (1) zu ermitteln.

2. Verfahren (100) nach Anspruch 1,
**dadurch gekennzeichnet,**
**dass** das Verfahren (100) ferner den folgenden Schritt umfasst:
- Bereitstellen einer aufgabenspezifischen Analyse der Umgebung des Fahrzeugs (1) auf Basis der bestimmten Ausgabe (7) des wenigstens einen aufgabenspezifischen Moduls (6) und/oder der zumindest einen vergangenen Ausgabe des Vorverarbeitungsmoduls (5).

3. Verfahren (100) nach Anspruch 1 oder 2,
**dadurch gekennzeichnet,**
**dass** die Rückkopplungsdaten (4) ferner vergangene Sensordaten (3) aus der wenigstens einen Iteration vor der aktuellen Iteration und/oder vergangene verarbeitete Eingabedaten aus der wenigstens einen Iteration vor der aktuellen Iteration umfassen, wobei das Extrahieren (104) ferner auf Basis der vergangenen Sensordaten (3) und/oder der vergangenen verarbeiteten Eingabedaten durchgeführt wird.

4. Verfahren (100) nach einem der vorhergehenden Ansprüche, **dadurch gekennzeichnet,**
**dass** das Bereitstellen (103) der Rückkopplungsdaten (4) den folgenden Schritt umfasst:
- Transformieren der vergangenen Ausgabe (7) unter Verwendung eines physikalischen Modells (8), wobei das physikalische Modell (8) zumindest eine Bewegung des Fahrzeugs (1) und/oder wenigstens eines durch das wenigstens eine aufgabenspezifische Modul (6) detektierten Objekts beschreibt.

5. Verfahren (100) nach einem der vorhergehenden Ansprüche,
**dadurch gekennzeichnet,**
**dass** wenigstens zwei Sensoren (2) vorgesehen sind und die wenigstens zwei Sensoren (2) wenigstens zwei verschiedene Typen von Sensoren sind.

6. Verfahren (100) nach einem der vorhergehenden Ansprüche,
**dadurch gekennzeichnet,**
**dass** das wenigstens eine aufgabenspezifische Modul (6) für eine Detektions- und/oder eine Klassifikationsaufgabe ausgebildet ist.

7. Verfahren (100) nach einem der vorhergehenden Ansprüche,
**dadurch gekennzeichnet,**
**dass** das Verfahren (100) ferner wenigstens einen der folgenden Schritte umfasst:
- Initiieren einer visuellen oder akustischen Benachrichtigung in dem Fahrzeug (1) auf Basis der bestimmten jeweiligen Ausgabe,
- Initiieren einer Steuerung des Fahrzeugs (1) auf Basis der bestimmten jeweiligen Ausgabe.

8. Verfahren (100) nach einem der vorhergehenden Ansprüche,
**dadurch gekennzeichnet,**
**dass** das Vorverarbeitungsmodul (5) als ein faltungsneuronales Netz, ein Transformator- oder Punktverarbeitungsnetz oder als eine Kombination dieser Netztypen ausgebildet ist.

9. Computerprogramm (20), umfassend Befehle, die bei der Ausführung des Computerprogramms (20) durch einen Computer (10) diesen veranlassen, das Verfahren (100) nach einem der vorhergehenden Ansprüche auszuführen.

10. Vorrichtung (10) zur Datenverarbeitung, die eingerichtet ist, das Verfahren (100) nach einem der Ansprüche 1 bis 8 auszuführen.

11. Computerlesbares Speichermedium (15), umfassend Befehle, die bei der Ausführung durch einen Computer (10) diesen veranlassen, die Schritte des Verfahrens (100) nach einem der Ansprüche 1 bis 8 auszuführen.

## Geänderte Patentansprüche

### Geänderte Patentansprüche gemäss Regel 137(2) EPÜ.

1. Computerimplementiertes Verfahren (100) zum Ermitteln einer Umgebungsrepräsentation einer Umgebung eines Fahrzeugs (1), umfassend die nachfolgenden Schritte:
- Bereitstellen (101) von Eingabedaten, wobei die Eingabedaten Sensordaten (3) und Rückkopplungsdaten (4) umfassen, wobei die Sensordaten (3) aus einer Erfassung von wenigstens einem Sensor (2) des Fahrzeugs (1) resultieren, wobei die Sensordaten (3) eine Erfassung der Umgebung des Fahrzeugs (1) repräsentieren,
- Bereitstellen (102) eines Maschinenlernmodells (9), wobei das Maschinenlernmodell (9) ein Vorverarbeitungsmodul (5) und mehrere aufgabenspezifische Module (6) aufweist,
- Bereitstellen (103) der Rückkopplungsdaten (4), wobei die Rückkopplungsdaten (4) zumindest eine vergangene Ausgabe (7) der aufgabenspezifischen Module (6) umfassen, wobei die vergangene Ausgabe (7) wenigstens eine Iteration vor einer aktuellen Iteration durch die aufgabenspezifischen Module (6) bestimmt wurde,
- Extrahieren (104) von Merkmalen aus den Eingabedaten durch das Vorverarbeitungsmodul (5),
- Bestimmen (105) einer jeweiligen Ausgabe (7) für die aktuelle Iteration durch die aufgabenspezifischen Module (6) auf Basis der durch das Vorverarbeitungsmodul (5) extrahierten Merkmale und der zumindest einen vergangenen Ausgabe (7) der aufgabenspezifischen Module (6), um die Umgebungsrepräsentation der Umgebung des Fahrzeugs (1) zu ermitteln.

2. Computerimplementiertes Verfahren (100) nach Anspruch 1,
**dadurch gekennzeichnet,**
**dass** das Verfahren (100) ferner den folgenden Schritt umfasst:
- Bereitstellen einer aufgabenspezifischen Analyse der Umgebung des Fahrzeugs (1) auf Basis der bestimmten Ausgabe (7) des wenigstens einen aufgabenspezifischen Moduls (6).

3. Computerimplementiertes Verfahren (100) nach Anspruch 1 oder 2,
**dadurch gekennzeichnet,**
**dass** die Rückkopplungsdaten (4) ferner vergangene Sensordaten (3) aus der wenigstens einen Iteration vor der aktuellen Iteration und/oder vergangene verarbeitete Eingabedaten aus der wenigstens einen Iteration vor der aktuellen Iteration umfassen, wobei das Extrahieren (104) ferner auf Basis der vergangenen Sensordaten (3) und/oder der vergangenen verarbeiteten Eingabedaten durchgeführt wird.

4. Computerimplementiertes Verfahren (100) nach einem der vorhergehenden Ansprüche,
**dadurch gekennzeichnet,**
**dass** das Bereitstellen (103) der Rückkopplungsdaten (4) den folgenden Schritt umfasst:
- Transformieren der zumindest einen vergangenen Ausgabe (7) unter Verwendung eines physikalischen Modells (8), wobei das physikalische Modell (8) zumindest eine Bewegung des Fahrzeugs (1) und/oder wenigstens eines durch das wenigstens eine aufgabenspezifische Modul (6) detektierten Objekts beschreibt.

5. Computerimplementiertes Verfahren (100) nach einem der vorhergehenden Ansprüche,
**dadurch gekennzeichnet,**
**dass** wenigstens zwei Sensoren (2) vorgesehen sind und die wenigstens zwei Sensoren (2) wenigstens zwei verschiedene Typen von Sensoren sind.

6. Computerimplementiertes Verfahren (100) nach einem der vorhergehenden Ansprüche,
**dadurch gekennzeichnet,**
**dass** die aufgabenspezifischen Module (6) für eine Detektions- und/oder eine Klassifikationsaufgabe ausgebildet sind.

7. Computerimplementiertes Verfahren (100) nach einem der vorhergehenden Ansprüche,
**dadurch gekennzeichnet,**
**dass** das Verfahren (100) ferner wenigstens einen der folgenden Schritte umfasst:
- Initiieren einer visuellen oder akustischen Benachrichtigung in dem Fahrzeug (1) auf Basis der bestimmten jeweiligen Ausgabe,
- Initiieren einer Steuerung des Fahrzeugs (1) auf Basis der bestimmten jeweiligen Ausgabe.

8. Computerimplementiertes Verfahren (100) nach einem der vorhergehenden Ansprüche,
**dadurch gekennzeichnet,**
**dass** das Vorverarbeitungsmodul (5) als ein faltungsneuronales Netz, ein Transformator- oder Punktverarbeitungsnetz oder als eine Kombination dieser Netztypen ausgebildet ist.

9. Computerprogramm (20), umfassend Befehle, die bei der Ausführung des Computerprogramms (20) durch einen Computer (10) diesen veranlassen, das computerimplementierte Verfahren (100) nach einem der vorhergehenden Ansprüche auszuführen.

10. Vorrichtung (10) zur Datenverarbeitung, die eingerichtet ist, das computerimplementierte Verfahren (100) nach einem der Ansprüche 1 bis 8 auszuführen.

11. Computerlesbares Speichermedium (15), umfassend Befehle, die bei der Ausführung durch einen Computer (10) diesen veranlassen, die Schritte des computerimplementierten Verfahrens (100) nach einem der Ansprüche 1 bis 8 auszuführen.
